# EUROPEAN PATENT SPECIFICATION

(11) **EP 4 153 925 B1**
(45) Date of publication and mention of the grant of the patent: **09.12.2026**
(21) Application number: 21731838.5
(22) Date of filing: 19.05.2021
(51) Int. Cl.: F27B 3/08, F27B 3/28, H05B 7/144

(54) **A POWER SUPPLY SYSTEM FOR AN ELECTRIC ARC FURNACE**
STROMVERSORGUNGSSYSTEM FÜR EINEN LICHTBOGENOFEN
SYSTÈME D'ALIMENTATION ÉLECTRIQUE POUR FOUR À ARC ÉLECTRIQUE

(30) Priority: 22.05.2020 IT 202000012091
(43) Date of publication of application: 29.03.2023
(73) Proprietor: CEA GROUP S.R.L., 25125 Brescia (IT)
(72) Inventor: FUSARI, Oreste, 25125 Brescia (IT)
(74) Representative: De Lorenzo, Danilo
(86) International application number: PCT/IB2021/054321
(87) International publication number: WO 2021/234596

(56) References cited:
- WO-A1-2019/207609
- DE-A1- 19 617 191
- IT-A1- UA20 162 107

## Description

The present invention relates, in general, to the field of power supply systems for electric furnaces. In particular, the invention relates to a power supply system for an electric arc furnace, e.g., used for melting scrap metal.

An arc furnace needs a large amount of energy: each ton of molten steel requires 500 to 700 kWh. For example, from 50 to 70 MWh of electricity is needed to melt 100 tons. The average level of energy required can be as high as 200 MWh for a casting department of a steel production plant. Such high levels of energy are supplied by the electrical energy operator through the high voltage network (70 - 600 kV) successively transformed to medium voltage (around 30kV) by a main step-down transformer.

The electrical power company generally supplies power through a three-phase AC system. Accordingly, arc furnaces generally comprise three electrodes, each supplied by one of the aforementioned phases, but at lower voltages than the high voltages of electric power transmission systems. Generally, the electrodes are supplied at voltages between 100V and 1000V, to avoid generating excessively long electrical arcs, which are difficult to manage. Accordingly, it is common to use suitable transformers to convert the energy from the electrical power network to a voltage suitable for the operation of the electric furnace.

During the operation of the electric furnace, due to the high and impulsive absorbed currents, electrical disturbances are generated which have an impact on the supplier's electrical power network through the transformers. Such electrical disturbances mainly concern sine wave distortions (current and voltage harmonics), micro-interruptions, voltage fluctuations, impulsive current/voltage surges.

The effects of such disturbances can affect the correct operation of the components of the entire electrical system even significantly to the point of temporarily compromising the normal course of the energy or the concerned production process. In the sectors of industrial and advanced tertiary consumers, for example, such disturbances can give rise to annoying inefficiencies in production activities which have made it necessary to resort to instruments for either reducing or eliminating such disturbances alongside the transformers for supplying the furnaces.

The known compensation systems of the aforesaid disturbances comprise capacitor banks, passive or active filter banks or static reactive power compensators (Static Var Compensator, SVC) or static synchronous compensators (Static Synchronous Compensator, SSC, Static Compensator, STATCOM). E.g. WO2019207611 A1 describes a compensation system.

However, the known compensation systems have the disadvantage of needing to be installed directly on the high- or medium-voltage supply network, which makes them particularly expensive and, above all, difficult to adapt to the different low-voltage values required by each of the consumers in a plant (ladle furnace, arc furnace, rolling mill, etc.).

Additionally, in an inconvenient manner, the power supply systems for arc furnaces of the prior art suffer from issues related to harmonic distortion THD, require high power consumption, and experience voltage fluctuations and imbalances.

It is an object the present invention to overcome the aforementioned limitations of the prior art with an electric furnace power supply system which limits (and eventually eliminates) the use of compensation systems of the prior art, thereby making it possible to reduce disturbances, reduce costs and increase versatility at the same time. According to the invention, such an object is solved by a power supply system for an arc or induction furnace according to claim 1.

Preferred embodiments of the invention are defined in the dependent claims.

The features and advantages of the power supply system for an arc furnace according to the present invention will be apparent from the following description, given by way of non-limiting example, according to the accompanying figures, in which:
- figure 1 shows a diagram of a power supply system of consumers of a metal melting plant according to the prior art;
- figure 2 shows a power supply system for an arc furnace according to an embodiment of the present invention;
- figure 3 shows a diagram of an indirect AC/AC converter according to an embodiment of the present invention;
- figure 4 shows a diagram of an indirect AC/AC converter according to an embodiment of the present invention.

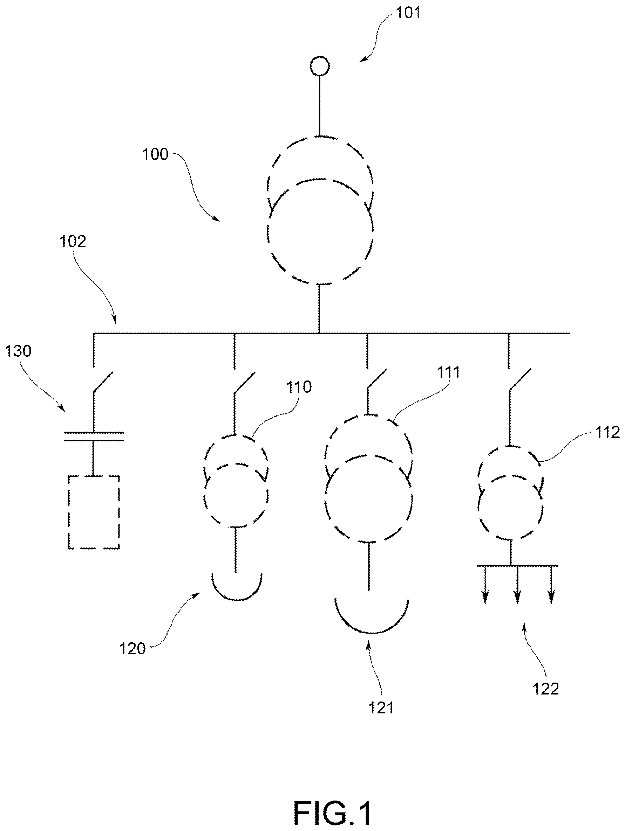

An example of a power supply system of consumers in a known industrial plant is shown in figure 1. The energy is transformed from the level of tens and hundreds of kV of the power company's supply line to the voltage level needed to supply a furnace in an industrial plant for melting metal in two stages. A first transformer 100 (sometimes two transformers in parallel) lowers the voltage from a high voltage line 101 to a medium level at an auxiliary distribution station 102. Generally, the average voltage level is standardized for each country (e.g. 15 to 34.5 kV, according to the country). Since the industrial plant requires electrical energy for different consumers, e.g. a rolling mill 122 or a ladle furnace 120 or an arc furnace 121, different types of transformers 110, 111, 112 are connected to the auxiliary station from which they draw electrical energy at the average voltage level.

From the auxiliary distribution station, each consumer receives power from a specific transformer 110, 111, 112. The voltage level of the secondary stage of each transformer is adapted to allow the correct operation of each consumer 120, 121, 122.

To compensate for electrical disturbances due to the operation of transformers 110, 111, 112, connected to the auxiliary distribution station, banks of passive or active filters 130 are connected to selectively suppress the disturbances generated by each consumer.

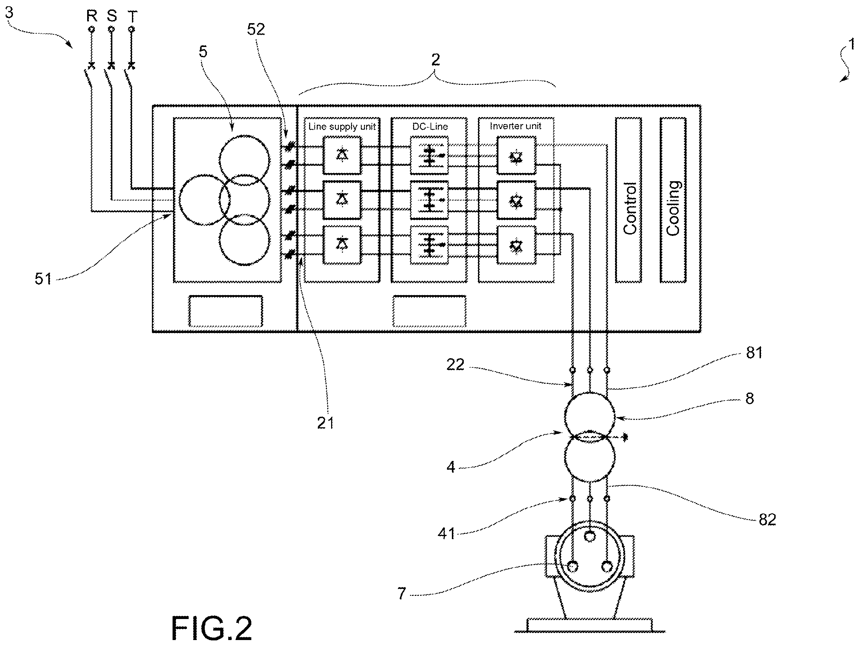

According to figures 2 to 4, an alternating current (AC) power supply system for arc furnace, e.g. singlephase or three-phase or multi-phase, according to the present invention, is referred to as a whole by reference numeral 1. The power supply system 1 comprises an indirect alternating current/ alternating current (AC/AC) converter 2 having a converter input 21 and a converter output 22 connected to a matching apparatus 4 connectable to the arc furnace 6. In the case of arc furnace 6, the output terminals 41 of the matching apparatus 4 are electrically connected to the electrodes 7 of the arc furnace, through which the electrode-metal arc responsible for melting the metal is sparked.

The power supply system is adapted to convert the voltage of the electric power network 3 into the power supply voltage for an arc furnace 6.

The matching apparatus 4 comprises a matching transformer 8 having a secondary side 82 connectable to the furnace 6 and a primary side 81 either directed or operatively connected to the converter output 22. In other words, the primary side 81 of the furnace transformer is preferably directly connected to the converter output 22.

In a preferred embodiment, the adapter transformer 8 is a transformer Dd4 (primary and secondary delta connection). The matching transformer 8 is configured to raise the current on the electrodes 7 of the furnace 6, thereby proportionally reducing the output voltage with respect to the input voltage. Preferably, the adapter transformer 8 has a power rating substantially equal to the power rating of the indirect AC/AC converter 2.

Preferably, the indirect AC/AC converter 2 either comprises (or consists of) a rectifier group 210, an inverter 210, and a DC-link circuit 211 connecting the rectifier and the inverter.

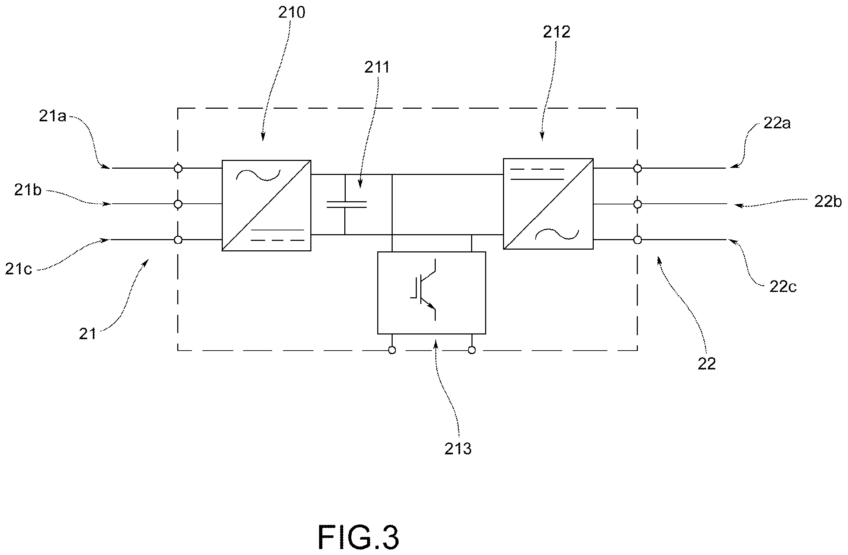

An exemplary embodiment of the indirect AC/AC converter 2 is shown in figure 3. The converter input 21 comprises the input terminals 21a, 21b, 21c connectable to the power distribution network 3. Such input terminals are electrically connected to the rectifier group 210, which allows the transformation of the incoming alternating current signal into direct current. The DC signal passes through a DC-link 211 circuit, preferably made to level the DC voltage through a capacitor bank. The DC-link circuit 211 is connected to the inverter 212, which is configured to convert the direct current signal back to alternating current.

A device 213 coupled to the inverter 212 controls and commands the generation of the output signal through PWM signal modulation.

In a preferred embodiment, the indirect AC/AC converter 2, delivers to the terminals 22a, 22b, 22c of the converter output 22 an electrical AC signal having a variable frequency (e.g. from 40Hz to 60 Hz) with respect to the electrical signal input to the converter input 21 and having an output voltage value suitable for supplying a given consumer, e.g. an arc furnace through the matching apparatus 4. The output circuit on the terminals 22a, 22b, 22c is preferably further suitable for managing the current on each of the three phases independently of the other two phases.

According to the invention, the power supply system 1 comprises an input transformer group 5 inserted between the indirect AC/AC converter and electric power network 3. Such an input transformer 5 comprises an input transformer primary side 51 connectable to the electric power network 3 and an input transformer secondary side 52 connected to the converter input 21. The input transformer group 5 comprises at least a first input transformer T1 and at least a second input transformer T2. Each of said first and second input transformers T1, T2 comprises three groups of mutually phase shifted secondary windings 520'; 520'', 520‴; 521'; 521''; 521‴ (i.e., having voltages and/or currents phase shifted between each group of windings according to a predetermined phase shift). Each of said groups of secondary windings 520'; 520'', 520‴; 521'; 521''; 521‴ comprises, in turn, a winding for each phase corresponding to a phase (R, S, T) of the electric power network 3.

This particular configuration makes it possible to reduce the total harmonic distortion (THD) and the backward disturbance harmonics towards the power supply line.

In particular, preferably, each of said first and second input transformers T1, T2 respectively comprises a single primary winding group 510, 510', directly connected to the phases of the power line 3. In other words, each input transformer T1, T2 comprises a single winding connected to the first phase R, a single winding connected to the second phase S, and a single winding connected to the third phase T.

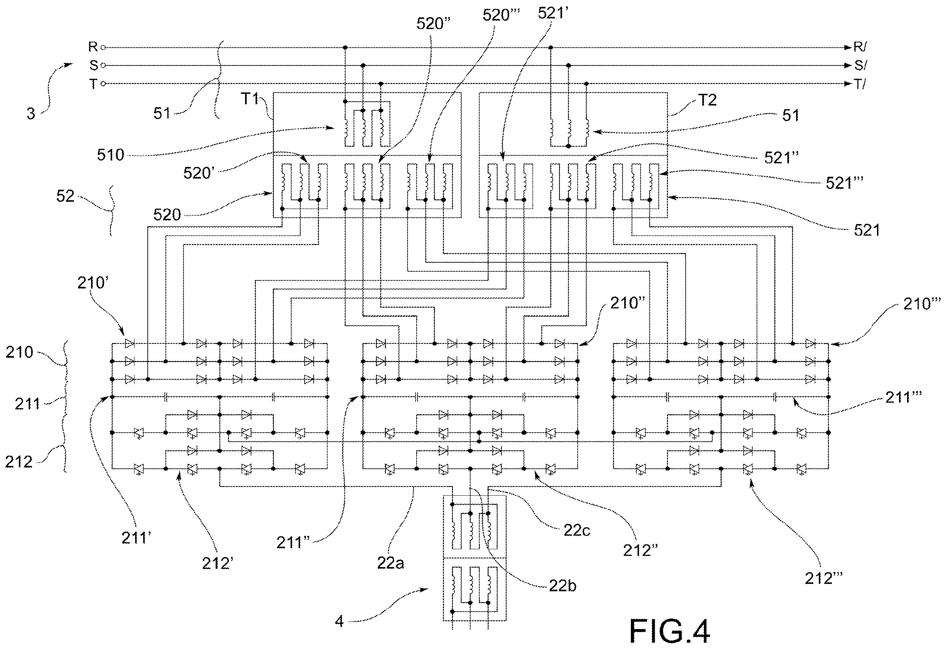

According to a preferred embodiment of the power supply system, e.g. shown in more detail in figure 4, each of said first and second input transformers T1, T2 comprises only one set of primary windings. Each group of primary windings comprises a winding for each phase corresponding to a phase R, S, T of the electric power network 3.

In particular, in an embodiment, the indirect AC/AC converter 2 comprises a rectifier group 210, an inverter 212 and a connection DC-link circuit 211 between rectifier and inverter.

Preferably, the rectifier group 210 comprises an eighteen or more pulse rectifier circuit.

Preferably, as shown in figure 4, the rectifier group 210 comprises three independent input rectifier groups 210', 210'', 210''. A first input rectifier group 210' of the three independent input rectifier groups is connected to the first group of secondary windings 520' of the first transformer T1 and the first group of secondary windings 521' of the second transformer T2. Furthermore, a second input rectifier group 210'' of the three independent input rectifier groups is connected to the second group of secondary windings 520'' of the first transformer T1 and the second group of secondary windings 521'' of the second transformer T2. Furthermore, a third input rectifier group 210‴ of the three independent input rectifier groups is connected to the third group of secondary windings 520‴ of the first transformer T1 and the third group of secondary windings 521'' of the second transformer T2.

Preferably, the AC/AC converter comprises three independent DC-link circuits 211', 211'', 211‴ and three independent inverter groups 212', 212'', 212'''. Each DC-link circuit 211', 211'', 211‴ is connected with a respective upstream input rectifier group 210', 210'', 210‴ and to a respective downstream inverter group 212', 212'', 212" .

According to a preferred embodiment, the first group of secondary windings 520' of the first transformer T1 and the first group of secondary windings 521' are connected to the first group of input rectifiers 210' to obtain a series of the voltages of each first group of secondary windings 520', 521'. Similarly, the second group of secondary windings 520" of the first transformer T1 and the second group of secondary windings 521'' are connected to the second group of input rectifiers 210'' to obtain a series of voltages of each first group of secondary windings 520'', 521''. Furthermore, the third group of secondary windings 520‴ of the first transformer T1 and the third group of secondary windings 521'' are connected to the third group of input rectifiers 210‴ to obtain a series of the voltages of each third group of secondary windings 520‴, 521‴,

In this manner, the voltage series of the secondaries of the first transformer T1 and the second transformer T2 is present for each phase (the voltage series for each phase on a respective terminal per phase) on the second transformer T2 downstream of the inverter groups 212', 212'', 212'', on the output terminals 22a, 22b, 22c of the converter 21.

Preferably, the indirect converter 2 delivers alternating current electrical energy having a variable voltage adaptable to each of the phases of the metal melting process: boring, melting phase and refining phase.

In the case of an arc furnace, it is a further object of the present invention to provide an arc management system comprising an arc furnace power supply system 1 described in the preceding paragraphs and an arc furnace comprising electrodes 7 directly or operatively connected to the power supply system 1.

Innovatively, the power supply system according to the present invention does not require active or passive compensation systems for the disturbance caused by furnace power transformers of the prior art because it provides a relatively high and nearly constant power factor and low harmonic distortion THD of both current and voltage.

In particular, in contrast to systems of the prior art which do not provide an input transformer between the power line and the indirect converter, the presence of the first input transformer T1 and at least a second input transformer T2, with respective groups of mutually phase shifted windings, i.e., connected as described in the present invention, makes it possible to reduce the total harmonic distortion (THD) and backward noise harmonics towards the power line.

Furthermore, the power supply system object of the invention advantageously makes it possible to vary the output voltage, thus making it possible to adapt to different consumers flexibly, not requiring dedicated transformers for each consumer.

Furthermore, the presence of the indirect converter advantageously allows the use of low voltage transformers to power the furnace, reducing costs and increasing installation flexibility.

Additionally, the power supply system according to the present invention makes it possible to obtain lower energy consumption than the power supply technology of the furnaces of the prior art.

It is apparent that a person skilled in the art may make changes to the invention described above, all of which are contained within the scope of protection as defined in the following claims to satisfy contingent needs.

## Claims

1. A power supply system (1) for an arc furnace (6), suitable for converting the voltage of a three-phase (R, S, T) electric power network (3) into power supply voltage for an arc furnace (6), comprising
- an indirect AC/AC converter (2) having a converter input (21) and a converter output (22);
- a matching apparatus (4) connected to the converter output (22) and connectable to the arc furnace (6), said matching apparatus (4) being suitable for receiving at least one voltage value output from the indirect AC/AC converter (2) and delivering a power supply voltage value for the arc furnace (6);
wherein the matching apparatus (4) comprises a matching transformer (8) having a secondary side (82) connectable to the furnace (6) and a primary side (81) operatively connected to the converter output (22),
wherein an input transformer group (5) is inserted between the indirect AC/AC converter and the electric power network (3), the input transformer group (5) comprising an input transformer primary side (51) connectable to the electric power network (3) and an input transformer secondary side (52) connected to the converter input (21), said input transformer group (5) comprising at least a first input transformer (T1) and at least a second input transformer (T2), wherein each of said first and second input transformers (T1, T2) comprises three mutually phase shifted groups of secondary windings (520'; 520'', 520‴; 521'; 521'', 521‴), each of said groups of secondary windings (520'; 520'', 520‴; 521'; 521'', 521‴) comprising a winding for each phase corresponding to a phase (R, S, T) of the electric power network (3);
wherein the indirect AC/AC converter (2) comprises a rectifier group (210), an inverter (212) and a connection DC-link circuit (211) between rectifier and inverter;
said power supply system (1) being **characterized in that** the rectifier group (210) comprises three independent input rectifier groups (210', 210'', 210‴), wherein a first input rectifier group (210') of the three independent input rectifier groups is connected to the first group of secondary windings (520') of the first transformer (T1) and the first group of secondary windings (521') of the second transformer (T2),
wherein a second group of input rectifiers (210'') of the three independent input rectifier groups is connected to the second group of secondary windings (520'') of the first transformer (T1) and the second group of secondary windings (521") of the second transformer (T2),
wherein a third group of input rectifiers (210‴) of the three independent input rectifier groups is connected to the third group of secondary windings (520‴) of the first transformer (T1) and the third group of secondary windings (521‴) of the second transformer (T2).

2. Power supply system (1) according to claim 1, wherein each of said first and second input transformers (T1, T2) comprises only one group of primary windings comprising one winding for each phase corresponding to a phase (R, S, T) of the electric power network (3).

3. Power supply system (1) according to any one of the preceding claims, wherein the AC/AC converter comprises three independent DC-link circuits (211', 211'', 211‴) and three independent inverter groups (212', 212'', 212‴), each DC-link circuit (211', 211'', 211''') being connected to a respective upstream input rectifier group (210', 210'', 210‴) and a respective downstream inverter group (212', 212'', 212'').

4. Power supply system (1) according to any one of the preceding claims, wherein the indirect AC/AC converter (2) supplies an electrical AC signal from the converter output (22) having a variable frequency relative to the electrical input signal at the converter input (21), said electrical signal having an output voltage value suitable for supplying power to the arc furnace (6).

5. Power supply system according to any one of the preceding claims, wherein the matching transformer (8) has a nominal power substantially equal to the nominal power of the indirect AC/AC converter (2).

6. Power supply system according to any one of the preceding claims, wherein the matching transformer (8) is a transformer with delta primary and delta secondary.

7. Power supply system according to any one of the preceding claims, wherein the rectifier group (210) comprises a rectifier circuit having eighteen or more pulses.

8. An arc management system for an arc furnace (6) with electrodes (7), comprising:
- a power supply system according to any one of claims from 1 to 7;
- an arc furnace (30) comprising electrodes operatively connected to the power supply system (1).

## Patentansprüche

1. Stromversorgungssystem (1) für einen Lichtbogenofen (6), das zum Umwandeln der Spannung eines dreiphasigen (R, S, T) elektrischen Versorgungsnetzes (3) in eine Versorgungsspannung für einen Lichtbogenofen (6) geeignet ist, umfassend
- einen indirekten AC/AC-Wandler (2) mit einem Wandlereingang (21) und einem Wandlerausgang (22);
- eine Anpassungsvorrichtung (4), die mit dem Wandlerausgang (22) verbunden und mit dem Lichtbogenofen (6) verbindbar ist, wobei die Anpassungsvorrichtung (4) geeignet ist, mindestens einen vom indirekten AC/AC-Wandler (2) ausgegebenen Spannungswert zu empfangen und einen Versorgungsspannungswert für den Lichtbogenofen (6) abzugeben;
wobei die Anpassungsvorrichtung (4) einen Anpassungstransformator (8) umfasst, der eine mit dem Ofen (6) verbindbare Sekundärseite (82) und eine mit dem Wandlerausgang (22) wirkverbundene Primärseite (81) aufweist,
wobei eine Eingangstransformatorgruppe (5) zwischen dem indirekten AC/AC-Wandler und dem elektrischen Versorgungsnetz (3) eingefügt ist, wobei die Eingangstransformatorgruppe (5) eine mit dem elektrischen Versorgungsnetz (3) verbindbare Eingangstransformator-Primärseite (51) und eine mit dem Wandlereingang (21) verbundene Eingangstransformator-Sekundärseite (52) umfasst, wobei die Eingangstransformatorgruppe (5) mindestens einen ersten Eingangstransformator (T1) und mindestens einen zweiten Eingangstransformator (T2) umfasst, wobei jeder des ersten und zweiten Eingangstransformators (T1, T2) drei gegeneinander phasenverschobene Gruppen von Sekundärwicklungen (520'; 520", 520‴; 521'; 521", 521‴) umfasst, wobei jede der Gruppen von Sekundärwicklungen (520'; 520", 520‴; 521'; 521", 521‴) eine Wicklung für jede Phase entsprechend einer Phase (R, S, T) des elektrischen Versorgungsnetzes (3) umfasst;
wobei der indirekte AC/AC-Wandler (2) eine Gleichrichtergruppe (210), einen Wechselrichter (212) und einen Verbindungsgleichstrom-Zwischenkreis (211) zwischen Gleichrichter und Wechselrichter umfasst;
wobei das Stromversorgungssystem (1) **dadurch gekennzeichnet ist, dass** die Gleichrichtergruppe (210) drei unabhängige Eingangsgleichrichtergruppen (210', 210", 210‴) umfasst, wobei eine erste Eingangsgleichrichtergruppe (210') der drei unabhängigen Eingangsgleichrichtergruppen mit der ersten Gruppe von Sekundärwicklungen (520') des ersten Transformators (T1) und der ersten Gruppe von Sekundärwicklungen (521') des zweiten Transformators (T2) verbunden ist,
wobei eine zweite Gruppe von Eingangsgleichrichtern (210") der drei unabhängigen Eingangsgleichrichtergruppen mit der zweiten Gruppe von Sekundärwicklungen (520") des ersten Transformators (T1) und der zweiten Gruppe von Sekundärwicklungen (521") des zweiten Transformators (T2) verbunden ist,
wobei eine dritte Gruppe von Eingangsgleichrichtern (210‴) der drei unabhängigen Eingangsgleichrichtergruppen mit der dritten Gruppe von Sekundärwicklungen (520‴) des ersten Transformators (T1) und der dritten Gruppe von Sekundärwicklungen (521‴) des zweiten Transformators (T2) verbunden ist.

2. Stromversorgungssystem (1) nach Anspruch 1, wobei jeder des ersten und zweiten Eingangstransformators (T1, T2) nur eine Gruppe von Primärwicklungen umfasst, die eine Wicklung für jede Phase entsprechend einer Phase (R, S, T) des elektrischen Versorgungsnetzes (3) umfasst.

3. Stromversorgungssystem (1) nach einem der vorhergehenden Ansprüche, wobei der AC/AC-Wandler drei unabhängige Gleichstrom-Zwischenkreise (211', 211", 211‴) und drei unabhängige Wechselrichtergruppen (212', 212", 212‴) umfasst, wobei jeder Gleichstrom-Zwischenkreis (211', 211", 211‴) mit einer jeweiligen vorgeschalteten Eingangsgleichrichtergruppe (210', 210", 210‴) und einer jeweiligen nachgeschalteten Wechselrichtergruppe (212', 212", 212") verbunden ist.

4. Stromversorgungssystem (1) nach einem der vorhergehenden Ansprüche, wobei der indirekte AC/AC-Wandler (2) ein elektrisches AC-Signal vom Wandlerausgang (22) liefert, das eine variable Frequenz relativ zum elektrischen Eingangssignal am Wandlereingang (21) aufweist, wobei das elektrische Signal einen Ausgangsspannungswert aufweist, der zur Stromversorgung des Lichtbogenofens (6) geeignet ist.

5. Stromversorgungssystem nach einem der vorhergehenden Ansprüche, wobei der Anpassungstransformator (8) eine Nennleistung aufweist, die im Wesentlichen gleich der Nennleistung des indirekten AC/AC-Wandlers (2) ist.

6. Stromversorgungssystem nach einem der vorhergehenden Ansprüche, wobei der Anpassungstransformator (8) ein Transformator mit Dreieck-Primärseite und Dreieck-Sekundärseite ist.

7. Stromversorgungssystem nach einem der vorhergehenden Ansprüche, wobei die Gleichrichtergruppe (210) eine Gleichrichterschaltung mit achtzehn oder mehr Pulsen umfasst.

8. Lichtbogenmanagementsystem für einen Lichtbogenofen (6) mit Elektroden (7), umfassend:
- ein Stromversorgungssystem nach einem der Ansprüche 1 bis 7;
- einen Lichtbogenofen (30), der Elektroden umfasst, die mit dem Stromversorgungssystem (1) wirkverbunden sind.

## Revendications

1. Système d'alimentation électrique (1) pour un four à arc (6), apte à convertir la tension d'un réseau électrique triphasé (R, S, T) (3) en une tension d'alimentation électrique pour un four à arc (6), comprenant
- un convertisseur CA/CA indirect (2) comportant une entrée de convertisseur (21) et une sortie de convertisseur (22) ;
- un appareil d'adaptation (4) relié à la sortie de convertisseur (22) et pouvant être relié au four à arc (6), ledit appareil d'adaptation (4) étant apte à recevoir au moins une valeur de tension délivrée en sortie par le convertisseur CA/CA indirect (2) et à fournir une valeur de tension d'alimentation électrique pour le four à arc (6) ;
dans lequel l'appareil d'adaptation (4) comprend un transformateur d'adaptation (8) comportant un côté secondaire (82) pouvant être relié au four (6) et un côté primaire (81) relié de manière opérationnelle à la sortie de convertisseur (22),
dans lequel un groupe de transformateurs d'entrée (5) est inséré entre le convertisseur CA/CA indirect et le réseau électrique (3), le groupe de transformateurs d'entrée (5) comprenant un côté primaire de transformateur d'entrée (51) pouvant être relié au réseau électrique (3) et un côté secondaire de transformateur d'entrée (52) relié à l'entrée de convertisseur (21), ledit groupe de transformateurs d'entrée (5) comprenant au moins un premier transformateur d'entrée (T1) et au moins un deuxième transformateur d'entrée (T2), dans lequel chacun desdits premier et deuxième transformateurs d'entrée (T1, T2) comprend trois groupes d'enroulements secondaires déphasés les uns par rapport aux autres (520' ; 520", 520‴ ; 521' ; 521", 521‴), chacun desdits groupes d'enroulements secondaires (520' ; 520", 520‴ ; 521' ; 521", 521‴) comprenant un enroulement pour chaque phase correspondant à une phase (R, S, T) du réseau électrique (3) ;
dans lequel le convertisseur CA/CA indirect (2) comprend un groupe de redresseurs (210), un onduleur (212) et un circuit de liaison CC (211) de liaison entre le redresseur et l'onduleur ;
ledit système d'alimentation électrique (1) étant **caractérisé en ce que** le groupe de redresseurs (210) comprend trois groupes de redresseurs d'entrée indépendants (210', 210", 210‴), dans lequel un premier groupe de redresseurs d'entrée (210') des trois groupes de redresseurs d'entrée indépendants est relié au premier groupe d'enroulements secondaires (520') du premier transformateur (T1) et au premier groupe d'enroulements secondaires (521') du deuxième transformateur (T2),
dans lequel un deuxième groupe de redresseurs d'entrée (210") des trois groupes de redresseurs d'entrée indépendants est relié au deuxième groupe d'enroulements secondaires (520") du premier transformateur (T1) et au deuxième groupe d'enroulements secondaires (521") du deuxième transformateur (T2),
dans lequel un troisième groupe de redresseurs d'entrée (210‴) des trois groupes de redresseurs d'entrée indépendants est relié au troisième groupe d'enroulements secondaires (520‴) du premier transformateur (T1) et au troisième groupe d'enroulements secondaires (521‴) du deuxième transformateur (T2).

2. Système d'alimentation électrique (1) selon la revendication 1, dans lequel chacun desdits premier et deuxième transformateurs d'entrée (T1, T2) comprend un seul groupe d'enroulements primaires comprenant un enroulement pour chaque phase correspondant à une phase (R, S, T) du réseau électrique (3).

3. Système d'alimentation électrique (1) selon l'une quelconque des revendications précédentes, dans lequel le convertisseur CA/CA comprend trois circuits de liaison CC indépendants (211', 211", 211‴) et trois groupes d'onduleurs indépendants (212', 212", 212‴), chaque circuit de liaison CC (211', 211", 211‴) étant relié à un groupe de redresseurs d'entrée amont respectif (210', 210", 210‴) et à un groupe d'onduleurs aval respectif (212', 212", 212").

4. Système d'alimentation électrique (1) selon l'une quelconque des revendications précédentes, dans lequel le convertisseur CA/CA indirect (2) fournit un signal électrique alternatif (CA) à partir de la sortie de convertisseur (22) ayant une fréquence variable par rapport au signal électrique d'entrée au niveau de l'entrée de convertisseur (21), ledit signal électrique ayant une valeur de tension de sortie apte à alimenter en énergie le four à arc (6).

5. Système d'alimentation électrique selon l'une quelconque des revendications précédentes, dans lequel le transformateur d'adaptation (8) a une puissance nominale sensiblement égale à la puissance nominale du convertisseur CA/CA indirect (2).

6. Système d'alimentation électrique selon l'une quelconque des revendications précédentes, dans lequel le transformateur d'adaptation (8) est un transformateur à primaire en triangle et secondaire en triangle.

7. Système d'alimentation électrique selon l'une quelconque des revendications précédentes, dans lequel le groupe de redresseurs (210) comprend un circuit redresseur à dix-huit impulsions ou plus.

8. Système de gestion d'arc pour un four à arc (6) comportant des électrodes (7), comprenant :
- un système d'alimentation électrique selon l'une quelconque des revendications 1 à 7 ;
- un four à arc (30) comprenant des électrodes reliées de manière opérationnelle au système d'alimentation électrique (1).
